# EUROPEAN PATENT SPECIFICATION

(11) **EP 4 160 783 B1**
(45) Date of publication and mention of the grant of the patent: **01.01.2025**
(21) Application number: 22198091.5
(22) Date of filing: 27.09.2022
(51) Int. Cl.: H01M 10/42, H01M 10/48, H01M 50/207, H01M 50/249, H01M 50/271, H01M 50/291, H01M 50/298, H01M 50/503, H01M 50/526, H01M 50/569

(54) **BATTERY PACK**
BATTERIEPACK
BLOC-BATTERIE

(30) Priority: 30.09.2021 KR 20210129489
(43) Date of publication of application: 05.04.2023
(73) Proprietor: SK On Co., Ltd., Seoul 03161 (KR)
(72) Inventor: HAN, Jin Su, 34124 Daejeon (KR); KANG, Min Song, 34124 Daejeon (KR); PARK, Ju Yong, 34124 Daejeon (KR); CHO, Sei Hoon, 34124 Daejeon (KR); KIM, Ji Woong, 34124 Daejeon (KR); PAK, Byeong Jun, 34124 Daejeon (KR)
(74) Representative: Prüfer & Partner mbB Patentanwälte · Rechtsanwälte

(56) References cited:
- EP-A1- 3 261 154
- WO-A1-2020/177606
- US-A1- 2013 330 595

## Description

### BACKGROUND

### 1. FIELD

The present disclosure relates to technology related to a battery pack.

### 2. DESCRIPTION OF RELATED ART

A secondary battery is a battery which may be charged and discharged unlike a primary battery which is unable to be charged, and may be applied not only to a portable device, but also to an electric vehicle (EV), a hybrid electric vehicle (HEV) or the like, driven by an electric driving source. Types of secondary batteries currently widely used may include a lithium ion battery, a lithium polymer battery, a nickel cadmium battery, a nickel hydrogen battery, a nickel zinc battery and the like. An operation voltage of a unit cell of the secondary battery, that is, a unit cell of the battery, may be about 2.5 V to 4.6 V. Therefore, when a higher output voltage is required, the plurality of battery cells may be connected in series to each other to form a battery pack. In addition, the plurality of battery cells may be connected to each other in parallel to form the battery pack, based on a charge/discharge capacity required for the battery pack. Accordingly, the number of battery cells included in the battery pack may be variously set based on the required output voltage or charge/discharge capacity.
Document WO 2020/177606 A1 discloses a battery pack, comprising: a battery module comprising multiple battery units arranged in an array; a battery pack case comprising cross beams and longitudinal beams defining multiple module accommodation spaces, thermal insulation layers being provided at the cross beam and the longitudinal beam close to an accessory accommodation space, the accessory accommodation space accommodating a battery management system and a high-voltage electrical equipment box; and a lower cover thermal insulation layer provided at a side of the battery pack case away from the battery module. The projection of the lower cover thermal insulation layer on a plane in which the battery module is located covers at least the outermost battery units at four sides of the battery module. The battery pack has a thermally insulated case structure, thereby enhancing thermal insulation performance while reducing thermal insulation costs. Thermal insulation processing is performed at regions of the case housing battery modules more likely to be affected by the ambient temperature, thereby minimizing the use of a thermal insulation material.
Document EP 3 261 154 A1 discloses A secondary battery pack which includes: a secondary battery module having a plurality of battery cells and a plurality of cooling fins; a first structure formed in a first (one) side cover shape which is mounted on one side of the secondary battery module and includes a cooling channel and a bracket mounted in a vehicle to be fixed thereto; and a second structure which is formed in a second side cover shape mounted on the other side of the secondary battery module and includes a printed circuit board.
Document US 2013/0330595 A1 discloses a bus bar for electrically connecting electrode leads of unit modules or battery cells (unit cells) in a battery module through a coupling method employing laser welding. Each of the electrode leads and the bus bar has a plate-shaped structure and a protrusion projecting toward the electrode leads is formed on the bus bar at a portion thereof, which is to be welded to the electrode leads through laser irradiation, to allow the portion of the bus bar, which is to be welded to the electrode leads, to be brought into close contact with the electrode leads.

Various electronic components such as various battery modules, a battery management system (BMS) and a power relay assembly (PRA) may be positioned in the battery pack, and these electronic components may be connected to each other by electronic wiring. For example, the electronic components may be connected to each other by the electronic wiring such as a wiring harness or a bus bar, which may transmit electric power or an electrical signal.

Meanwhile, a general battery pack may include a low voltage (LV) harness having a large number of wires in order to obtain information on a plurality of battery modules included in the battery pack. However, the LV harness may have a complicated shape and may occupy a relatively large amount of space. In addition, when an event such as a cell ignition occurs in the battery pack, the LV harness in a complicated arrangement may act as a factor which may aggravate the event, such as blocking a gas flow path.

### SUMMARY

An aspect of the present disclosure may provide a battery pack having efficient internal space by effectively arranging electronic wiring such as a wiring harness and a bus bar therein. Another aspect of the present disclosure may provide a battery pack which may prevent electronic wiring therein from aggravating thermal runaway or heat propagation in the pack.

According to the present disclosure, a battery pack includes: a pack housing having an internal space; at least one cell stack body accommodated in the internal space of the pack housing; at least one electronic component accommodated in the internal space of the pack housing; a connecting member electrically connected to at least one of the at least one cell stack body and the at least one electronic component; and a partition wall partitioning the internal space and accommodating at least a portion of the connecting member

The partition wall includes a void therein, and the connecting member may be accommodated in the void. The connecting member includes a first connecting member connected to the at least one electronic component, a second connecting member connected to at least one cell stack body and at least one electronic component, and a third connecting member connected to at least one cell stack body and at least one electronic component. The partition wall includes a void accomodating a first connecting member, and a recess accomodating a second connecting member and a third connecting member. The partition wall includes an upper surface, a side surface extended from each of two ends of the upper surface, and a recessed surface inward from the side surface (1132a) defining a portion of the recess.

The partition wall may include a lower frame and an upper frame, coupled to the lower frame, and the void may be formed between the lower frame and the upper frame.

The partition wall includes the recess in a side surface.

The connecting member may include a conductive member and an insulating member surrounding the conductive member.

The connecting member may be a bus bar connected to an input/output port of the at least one cell stack body.

The at least one electronic component may be a battery management system (BMS), and the connecting member may be a low voltage (LV) harness connected to the battery management system.

The partition wall includes a void besides the recess, and the void and the recess may be spatially separated from each other.

### BRIEF DESCRIPTION OF DRAWINGS

The above and other aspects, features and advantages of the present disclosure will be more clearly understood from the following detailed description taken in conjunction with the accompanying drawings, in which:
FIG. 1 illustrates a battery pack according to an exemplary embodiment;
FIG. 2 illustrates a component in a pack housing and a connecting member connected to the components;
FIG. 3 illustrates the connecting member accommodated in a partition wall in an exemplary embodiment;
FIG. 4 illustrates a method of assembling the connecting member in the partition wall;
FIG. 5 illustrates the connecting member accommodated in a recess of the partition wall in an exemplary embodiment;
FIGS. 6 and 7 each illustrate that the connecting member is accommodated in a side surface of the partition wall according to an exemplary embodiment; and
FIG. 8 is a view illustrating the connecting members accommodated in an internal space and the recess of the partition wall in an exemplary embodiment.

### DETAILED DESCRIPTION

In this specification, an X-direction, a Y-direction and a Z-direction may indicate a direction parallel to an X axis, a direction parallel to a Y axis, and a direction parallel to a Z axis, each illustrated in the drawings. In addition, unless otherwise described, the X-direction may be a concept including both a +X axis direction and a -X axis direction, which may be equally applied to the Y-direction and the Z-direction.

In this specification, a case in which two directions (or axes) are parallel to or perpendicular to each other may also include a case in which the two directions (or axes) are substantially parallel or substantially parallel to each other. For example, a case in which the first axis and the second axis are perpendicular to each other may indicate a case in which the first axis and the second axis form an angle of 90 degrees or an angle close to 90 degrees.

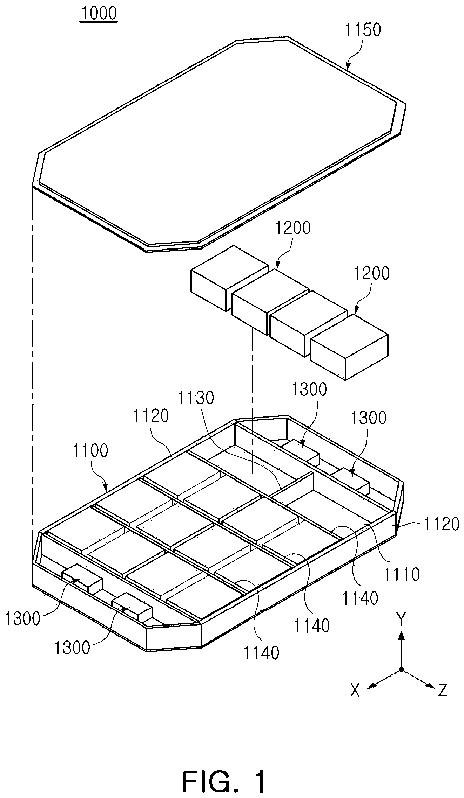

FIG. 1 illustrates a battery pack 1000 according to an exemplary embodiment. Referring to FIG. 1, the battery pack 1000 in an exemplary embodiment may include a pack housing 1100 and a plurality of cell stack bodies 1200 accommodated in the pack housing 1100. The pack housing 1100 may include a lower plate 1110, a side plate 1120 disposed on an edge of the lower plate 1110, a partition wall 1130 partitioning a space surrounded by the side plate 1120 and an upper plate 1150 disposed on the cell stack bodies 1200. The upper plate 1150 and/or the lower plate 1110 may function as a cooling plate. The lower plate 1110 and/or the upper plate 1150 may be in direct or indirect contact with the cell stack bodies 1200 to dissipate heat generated in the cell stack bodies 1200. For example, at least one of the lower plate 1110 and the upper plate 1150 may include a flow path through which a refrigerant flows.

An internal space of the pack housing 1100 may be divided into several compartments by the partition wall 1130, and at least one cell stack body 1200 may be disposed in each compartment. FIG. 1 illustrates that one cell stack body 1200 is disposed in one compartment, which is only an example, and two or more cell stack bodies 1200 may be disposed therein. In addition, FIG. 1 illustrates that four electronic components 1300 are disposed in the pack housing 1100, which is only an example, and the number or positions of the electronic components 1300 in another exemplary embodiment may differ from those in the described exemplary embodiment.

At least one electronic component 1300 is disposed in the pack housing 1100. In the present disclosure, the electronic component 1300 may include a battery management system (BMS), a power relay assembly (PRA), a electric power management device, a battery charge/discharge device, and an input port of the battery pack 1000, an output port of the battery pack 1000, a device for sensing a battery state (e.g. voltage, lifespan, temperature, pressure or the like), a device for battery safety, a electric power cut-off system, a device for slow or fast charging, etc. Even a device not explicitly mentioned in the present disclosure may be included in the electronic component 1300 of the present disclosure as long as the device is an electronic device disposed in the battery pack 1000.

The battery pack 1000 may include a connecting member 1400 electrically connecting two or more of the cell stack bodies 1200 or the electronic components 1300 to each other. For example, the cell stack body 1200 may be electrically connected to another cell stack body 1200 in the battery pack 1000 by the connecting member 1400. For another example, the electronic component 1300 may be electrically connected to another electronic component 1300 in the battery pack 1000 by the connecting member 1400. For yet another example, the cell stack body 1200 may be electrically connected to the electronic component 1300 in the battery pack 1000 by the connecting member 1400.

The connecting member 1400 may electrically connect at least two different components in the battery pack 1000 to each other. For example, the connecting member 1400 may be a wiring harness or a bus bar.

According to an exemplary embodiment of the present disclosure, the connecting member 1400 may be an electronic wiring for high voltage or an electronic wiring for low voltage.

For example, a high current may flow between the cell stack bodies 1200, and the connecting member 1400 connecting the cell stack bodies 1200 to each other may thus be the electronic wiring for high voltage. For another example, when the electronic component 1300 is a component for charging the battery pack 1000, the connecting member 1400 connected to the corresponding electronic component 1300 may be the electronic wiring for high voltage. Meanwhile, the connecting member 1400 electrically connecting the battery management system (BMS) and the cell stack body 1200 to each other may be the electronic wiring for low voltage.

According to another exemplary embodiment of the present disclosure, the connecting member 1400 may be a bus bar connected to the input/output port (or port block) of the cell stack body 1200.

For example, the connecting member 1400 may be a low voltage (LV) harness connected to the battery management system (BMS) .

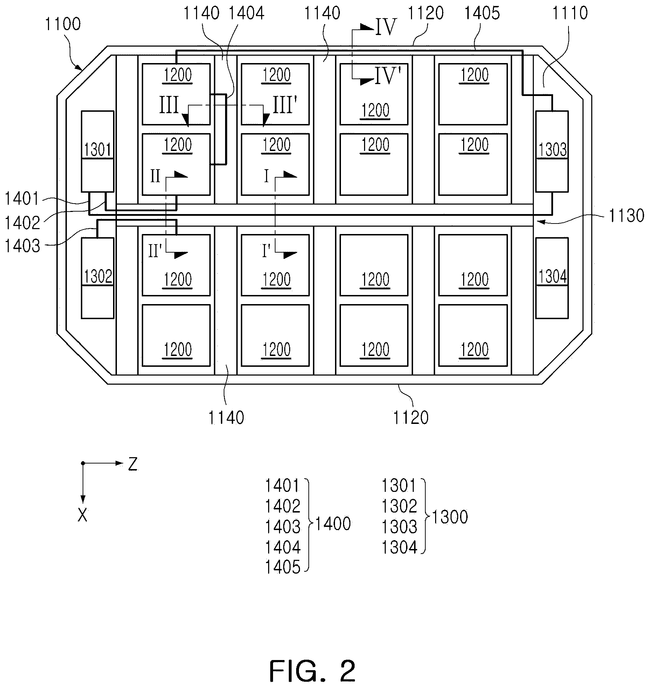

FIG. 2 illustrates the component in the battery pack 1000 and the connecting member connected to the components. Referring to FIG. 2, the connecting member 1400 may electrically connect the electronic component 1300 and the cell stack body 1200 to each other, or electrically connect the electronic components 1300 to each other or the cell stack bodies 1200 to each other.

FIG. 2 illustrates, as an example of the connecting member 1400, a first connecting member 1401 connecting a first electronic component 1301 and a third electronic component 1303 to each other, a second connecting member 1402 connecting the first electronic component 1301 and the cell stack body 1200 to each other, a third connecting member 1403 connecting a second electronic component 1302 and the cell stack body 1200 to each other, a fourth connecting member 1404 connecting the cell stack bodies 1200 to each other, and a fifth connecting member 1405 connecting the third electronic component 1303 and the cell stack body 1200 to each other.

The first to fifth connecting members 1401, 1402, 1403, 1404 and 1405 illustrated in FIG. 2 are only examples for convenience of description, and an exemplary embodiment of the present disclosure is not limited thereto. That is, the battery pack 1000 may include another type connecting member or an additional connecting member different from the first to fifth connecting members 1401, 1402, 1403, 1404 and 1405 illustrated in FIG. 2.

In an exemplary embodiment, the pack housing 1100 may include the partition wall 1130 and 1140 , partitioning the internal space of the pack housing 1100. The pack housing 1100 may include a first partition wall 1130 passing through the internal space in the X-direction. Also, the pack housing 1100 may include a second partition wall 1140 passing through the internal space in the Z-direction. The partition walls 1130 and 1140 illustrated in FIGS. 1 and 2 are only examples, and an exemplary embodiment of the present disclosure is not limited thereto.

In an exemplary embodiment, at least a portion of the connecting member 1400 may be accommodated in the partition wall 1130 or 1140. In an exemplary embodiment, the partition wall 1130 or 1140 may include an accommodation portion accommodating the connecting member 1400. For example, the accommodation portion may be an internal space of the partition wall 1130 or 1140. For another example, the accommodation portion may be a recess formed in a side surface of the partition wall 1130 or 1140.

According to an exemplary embodiment of the present disclosure, the connecting member 1400 may be accommodated in the partition wall 1130 or 1140, and an internal space of the battery pack 1000 may thus be efficiently utilized.

A conventional battery pack may have insufficient internal space, and a connecting member such as the wiring harness or a bus bar for high voltage may thus be positioned in a space between a partition wall and an upper plate.

However, in the battery pack 1000 according to an exemplary embodiment of the present disclosure, at least a portion of the connecting member 1400 may be accommodated in the partition wall 1130 or 1140, and the partition wall 1130 or 1140 may be extended relatively close to the upper plate 1150 from the lower plate 1110. When the partition wall 1130 or 1140 is extended relatively close to the upper plate 1150 from the lower plate 1110, it is possible to suppress propagation of flame, gas or heat between spaces partitioned by the partition wall 1130 or 1140, which may delay or prevent thermal runaway of the battery pack 1000.

Meanwhile, a general battery pack may include a plurality of battery modules, and the LV harness having a large number of wires in order to obtain information on the plurality of modules may have a complicated shape and occupy a relatively large amount of space. In addition, when an event such as a cell ignition occurs in the battery pack, the LV harness in a complicated arrangement may act as a factor which may aggravate the event, such as blocking a gas flow path.

On the other hand, according to an exemplary embodiment of the present disclosure, the LV harness may be accommodated in the partition wall 1130 or 1140, thereby preventing the above problem.

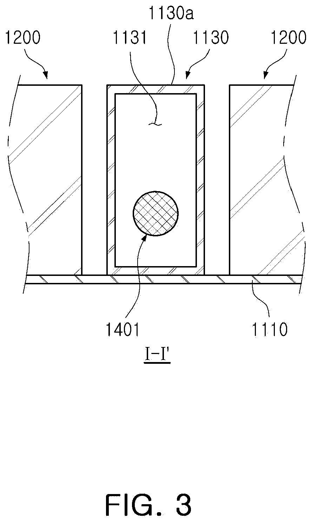

FIG. 3 illustrates the connecting member 1400 accommodated in the partition wall 1130 in an exemplary embodiment. FIG. 3 illustrates an example of a cross section of the first partition wall 1130 taken along line I-I' in FIG. 2.

Referring to FIG. 3, the first connecting member 1401 may be accommodated in the first partition wall 1130. In detail, the first partition wall 1130 may include a void 1131 therein, and the first connecting member 1401 may be accommodated in the void 1131. For example, the first partition wall 1130 may have a shape of a hollow square beam, and the first connecting member 1401 may be disposed in the square beam.

Referring to FIG. 2 together, the first connecting member 1401 may be extended in the first partition wall 1130 in a length direction (i.e., X-direction) of the first partition wall 1130, and let out from each of one and the other ends of the first partition wall 1130 to be connected to the electronic component 1300. FIG. 2 illustrates that the first connecting member 1401 connects the first electronic component 1301 and the third electronic component 1303 to each other, which is only an example. In another exemplary embodiment, one end of the first connecting member 1401 may be connected to the first electronic component 1301, and the other end of the first connecting member 1401 may be connected to the cell stack body 1200.

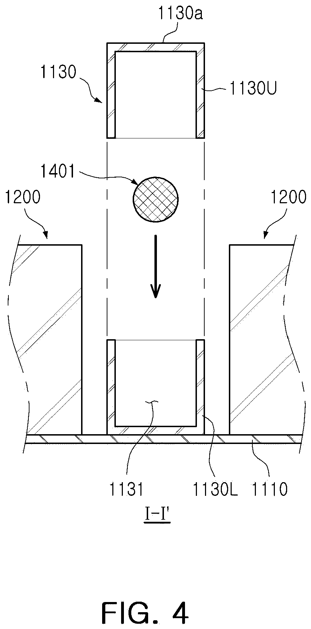

FIG. 4 illustrates a method of assembling the connecting member 1400 in the partition wall 1130. Referring to FIG. 4, the first partition wall 1130 may include a lower frame 1130L and an upper frame 1130U. In a state where the first connecting member 1401 is disposed in the lower frame 1130L, the upper frame 1130U may be coupled to the lower frame 1130L, and the first connecting member 1401 may thus be accommodated in the first partition wall 1130. For example, the lower frame 1130L and the upper frame 1130U may be welded to each other or coupled to each other by using mechanical fastening means such as bolt-nut coupling.

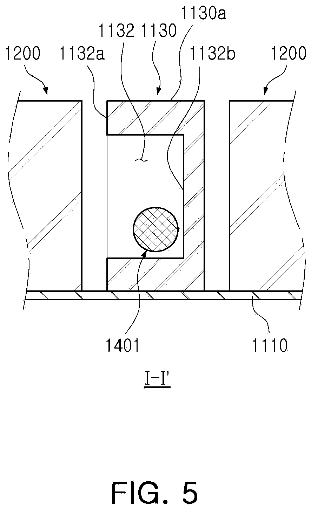

FIG. 5 illustrates the connecting member accommodated in the recess of the partition wall FIG. 5 illustrates another example of a cross section of the first partition wall 1130 taken along line I-I' in FIG. 2. Referring to FIG. 5, the first partition wall 1130 in an exemplary embodiment may include a recess 1132 accommodating the first connecting member 1401. For example, the first partition wall 1130 includes a side surface 1132a extended from each of two ends of an upper surface 1130a to the lower plate 1110, and a recessed surface 1132b inward from the side surface 1132a may be defined as a portion of the recess 1132.

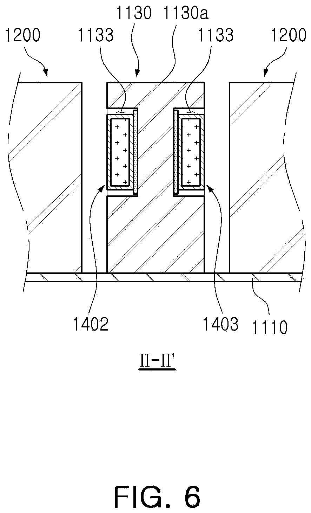

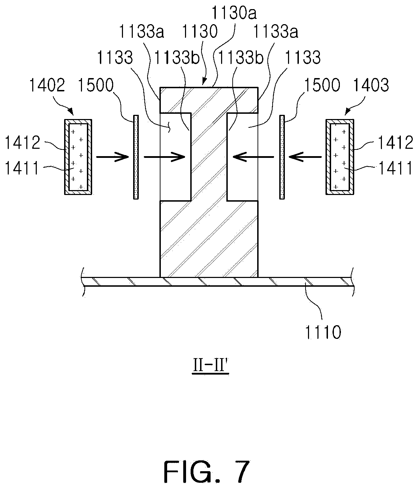

FIGS. 6 and 7 each illustrate that the connecting member 1400 is accommodated in each of two side surfaces of the partition wall 1130 according to an exemplary embodiment. FIG. 6 schematically illustrates the first partition wall 1130, the second connecting member 1402, and the third connecting member 1403, based on a cross section taken along line II-II' of the battery pack 1000 in FIG. 2.

In an exemplary embodiment, the second connecting member 1402 and the third connecting member 1403 are accommodated in the first partition wall 1130. The first partition wall 1130 includes a side surface 1133a extended from each of two ends of the upper surface 1130a to the lower plate 1110, and a recessed surface 1133b inward from the side surface 1133a to form a recess 1133. The recess 1133 may have a depth corresponding to a thickness of the connecting member 1400. For example, when the connecting member 1400 is accommodated in the first partition wall 1130, an outer surface of the connecting member 1400 may coincide with or approximately coincide with the side surface 1133a of the first partition wall 1130.

Referring to FIG. 7, the connecting member 1400 may include a conductive member 1411 and an insulating member 1412 surrounding at least a portion of the conductive member 1411 to insulate the first partition wall 1130 and the conductive member 1411 from each other. The connecting member 1400 may be mounted in the first partition wall 1130 by using an adhesive member 1500.

Referring to FIG. 2 together, the second connecting member 1402 and the third connecting member 1403 may be connected to the electronic component 1300 and the cell stack body 1200, which is only an example. The second connecting member 1402 or the third connecting member 1403 may connect the electronic components 1300 to each other or the cell stack bodies 1200 to each other.

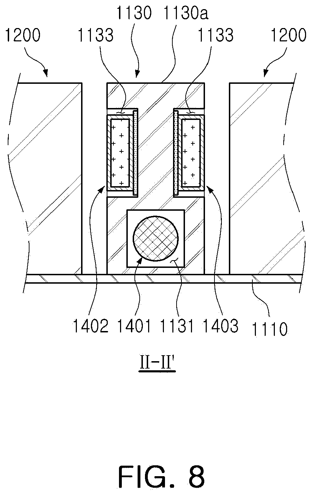

FIG. 8 illustrates the connecting member 1400 accommodated in the partition wall 1130 in an exemplary embodiment. FIG. 8 illustrates an example of a cross section of the first partition wall 1130 taken along line II-II' in FIG. 2.

In an exemplary embodiment, the partition wall may include the accommodation portions respectively accommodating two or more connecting members. The respective accommodation portions may be spatially separated from each other.

For example, referring to FIG. 8, the first partition wall 1130 includes the void 1131 therein and the recess 1133 formed in the side surface. The first connecting member 1401 are accommodated in the void 1131 in the first partition wall, and the second connecting member 1402 and the third connecting member 1403 are accommodated in the recesses 1133. In addition, the void 1131 and the recess 1133 are spatially separated from each other.

Meanwhile, FIGS. 6 through 8 illustrate that the recess 1133 accommodating the connecting member 1400 is disposed in each of the two side surfaces of the first partition wall 1130, which is only an example. In another exemplary embodiment, the recess 1133 may be disposed only in one side surface of the first partition wall 1130.

FIGS. 3 through 8 illustrate the connecting member 1400 accommodated in the first partition wall 1130, which is for convenience of description, and a structure included in the pack housing 1100 in addition to the first partition wall 1130 may accommodate the connecting member 1400.

In an exemplary embodiment, the connecting member 1400 may also be partially accommodated in the second partition wall 1140 or the side frame 1120. That is, the second partition wall 1140 or the side frame 1120 may include an accommodation portion accommodating at least a portion of the connecting member 1400. The accommodation portion may be a void formed in the second partition wall or the side frame or a recess formed in an outer side surface thereof.

Referring to FIG. 2, a portion of the fourth connecting member 1404 may be accommodated in the second partition wall 1140, and a portion of the fifth connecting member 1405 may be accommodated in the side frame 1120. That is, the fourth connecting member 1404 and the second partition wall 1140 may each be disposed in a shape similar to that of FIG. 3, 5 or 6, based on a cross section taken along line III-III' of FIG. 2. In addition, the fifth connecting member 1405 and the side frame 1120 may each have a shape similar to that of FIG. 3, 5 or 6, based on a cross section taken along line IV-IV' of FIG. 2.

As set forth above, according to an exemplary embodiment of the present disclosure, the battery pack may have the efficient internal space by effectively arranging the electronic wiring such as the wiring harness and the bus bar therein. In addition, according to an exemplary embodiment of the present disclosure, it is possible to prevent or minimize the thermal runaway or the heat propagation in the battery pack.

## Claims

1. A battery pack (1000) comprising:
a pack housing (1100) having an internal space;
at least one cell stack body (1200) accommodated in the internal space of the pack housing (1100);
at least one electronic component (1300) accommodated in the internal space of the pack housing (1100);
a connecting member (1400) electrically connected to at least one of the at least one cell stack body (1200) and the at least one electronic component (1300); and
a partition wall (1130) partitioning the internal space and accommodating at least a portion of the connecting member (1400),
wherein the connecting member (1400) includes a first connecting member (1401) connected to the at least one electronic component (1300), a second connecting member (1402) connected to at least one cell stack body (1200) and at least one electronic component (1300), and a third connecting member (1403) connected to at least one cell stack body (1200) and at least one electronic component (1300),
wherein the partition wall (1130) includes a void (1131) accomodating a first connecting member (1401), and a recess (1133) accomodating a second connecting member (1402) and a third connecting member (1403), and the partition wall (1130) includes an upper surface (1130a), a side surface (1132a) extended from each of two ends of the upper surface(1130a), and a recessed surface (1132b) inward from the side surface (1132a) defining a portion of the recess (1132).

2. The battery pack (1000) of claim 1, wherein the void (1131) is formed inside the partition wall (1130).

3. The battery pack (1000) of claim 2, wherein the partition wall (1130) includes a lower frame (1130L) and an upper frame (1130U), coupled to the lower frame (1130L), and the void (1131) is formed between the lower frame (1130L) and the upper frame (1130U).

4. The battery pack (1000) of anyone of the preceding claims 1, wherein the recess (1132) is formed in a side surface of the partition wall (1130).

5. The battery pack (1000) of anyone of the preceding claims 1, wherein the connecting member (1400) includes a conductive member (1411) and an insulating member (1412) surrounding the conductive member (1411).

6. The battery pack(1000) of anyone of the preceding claims 1, wherein the connecting member (1400) is a bus bar connected to an input/output port of the at least one cell stack body (1200).

7. The battery pack (1000) of anyone of the preceding claims 1, wherein the at least one electronic component (1300) is a battery management system (BMS), and the connecting member (1400) is a low voltage (LV) harness connected to the battery management system.

8. The battery pack (1000) of claim 1, wherein the void (1131) and the recess (1133) are spatially separated from each other.

## Patentansprüche

1. Batteriepack (1000), umfassend:
ein Packgehäuse (1100) mit einem Innenraum;
mindestens einen Zellenstapelkörper (1200), der in dem Innenraum des Packgehäuses (1100) untergebracht ist;
mindestens eine elektronische Komponente (1300), die in dem Innenraum des Packgehäuses (1100) untergebracht ist;
ein Verbindungselement (1400), das elektrisch mit mindestens einem von dem mindestens einen Zellenstapelkörper (1200) und der mindestens einen elektronischen Komponente (1300) verbunden ist; und
eine Trennwand (1130), die den Innenraum unterteilt und mindestens einen Abschnitt des Verbindungselements (1400) aufnimmt,
wobei das Verbindungselement (1400) ein erstes Verbindungselement (1401), das mit der mindestens einen elektronischen Komponente (1300) verbunden ist, ein zweites Verbindungselement (1402), das mit mindestens einem Zellenstapelkörper (1200) und mindestens einer elektronischen Komponente (1300) verbunden ist, und ein drittes Verbindungselement (1403), das mit mindestens einem Zellenstapelkörper (1200) und mindestens einer elektronischen Komponente (1300) verbunden ist, beinhaltet,
wobei die Trennwand (1130) einen Hohlraum (1131), der ein erstes Verbindungselement (1401) aufnimmt, und eine Aussparung (1133), die ein zweites Verbindungselement (1402) und ein drittes Verbindungselement (1403) aufnimmt, beinhaltet, und die Trennwand (1130) eine obere Fläche (1130a), eine Seitenfläche (1132a), die sich von jedem von zwei Enden der oberen Fläche (1130a) erstreckt, und eine vertiefte Fläche (1132b), die von der Seitenfläche (1132a) nach innen verläuft und einen Abschnitt der Aussparung (1132) begrenzt, beinhaltet.

2. Batteriepack (1000) gemäß Anspruch 1, wobei der Hohlraum (1131) innerhalb der Trennwand (1130) ausgebildet ist.

3. Batteriepack (1000) gemäß Anspruch 2, wobei die Trennwand (1130) einen unteren Rahmen (1130L) und einen oberen Rahmen (1130U), der mit dem unteren Rahmen (1130L) verbunden ist, beinhaltet und der Hohlraum (1131) zwischen dem unteren Rahmen (1130L) und dem oberen Rahmen (1130U) ausgebildet ist.

4. Batteriepack (1000) gemäß einem der vorhergehenden Ansprüche 1, wobei die Aussparung (1132) in einer Seitenfläche der Trennwand (1130) ausgebildet ist.

5. Batteriepack (1000) gemäß einem der vorhergehenden Ansprüche 1, wobei das Verbindungselement (1400) ein leitfähiges Element (1411) und ein Isolierelement (1412), das das leitfähige Element (1411) umgibt, beinhaltet.

6. Batteriepack (1000) gemäß einem der vorhergehenden Ansprüche 1, wobei das Verbindungselement (1400) eine Sammelschiene ist, die mit einem Eingangs-/Ausgangsanschluss des mindestens einen Zellenstapelkörpers (1200) verbunden ist.

7. Batteriepack (1000) gemäß einem der vorhergehenden Ansprüche 1, wobei die mindestens eine elektronische Komponente (1300) ein Batteriemanagementsystem (BMS) ist und das Verbindungselement (1400) ein Niederspannungs-Kabelbaum ist, der mit dem Batteriemanagementsystem verbunden ist.

8. Batteriepack (1000) gemäß Anspruch 1, wobei der Hohlraum (1131) und die Aussparung (1133) räumlich voneinander getrennt sind.

## Revendications

1. Un bloc batterie (1000) comprenant :
un boîtier de bloc (1100) ayant un espace interne ;
au moins un corps d'empilement de cellules (1200) placé dans l'espace interne du boîtier de bloc (1100) ;
au moins un composant électronique (1300) placé dans l'espace interne du boîtier de bloc (1100) ;
un élément de connexion (1400) connecté électriquement à au moins l'un de l'au moins un corps d'empilement de cellules (1200) et de l'au moins un composant électronique (1300) ; et
une paroi de séparation (1130) séparant l'espace interne et plaçant au moins une portion de l'élément de connexion (1400),
dans lequel l'élément de connexion (1400) inclut un premier élément de connexion (1401) connecté à l'au moins un composant électronique (1300), un deuxième élément de connexion (1402) connecté à au moins un corps d'empilement de cellules (1200) et à au moins un composant électronique (1300), et un troisième élément de connexion (1403) connecté à au moins un corps d'empilement de cellules (1200) et à au moins un composant électronique (1300),
dans lequel la paroi de séparation (1130) inclut un vide (1131) plaçant un premier élément de connexion (1401), et un évidement (1133) plaçant un deuxième élément de connexion (1402) et un troisième élément de connexion (1403), et la paroi de séparation (1130) inclut une surface supérieure (1130a), une surface latérale (1132a) étendue depuis chacune de deux extrémités de la surface supérieure (1130a), et une surface évidée (1132b) vers l'intérieur depuis la surface latérale (1132a) définissant une portion de l'évidement (1132).

2. Le bloc batterie (1000) selon la revendication 1, dans lequel le vide (1131) est formé à l'intérieur de la paroi de séparation (1130).

3. Le bloc batterie (1000) selon la revendication 2, dans lequel la paroi de séparation (1130) inclut un cadre inférieur (1130L) et un cadre supérieur (1130U), couplé au cadre inférieur (1130L), et le vide (1131) est formé entre le cadre inférieur (1130L) et le cadre supérieur (1130U).

4. Le bloc batterie (1000) selon l'une quelconque des revendications précédentes 1, dans lequel l'évidement (1132) est formé dans une surface latérale de la paroi de séparation (1130).

5. Le bloc batterie (1000) selon l'une quelconque des revendications précédentes 1, dans lequel l'élément de connexion (1400) inclut un élément conducteur (1411) et un élément isolant (1412) entourant l'élément conducteur (1411).

6. Le bloc batterie (1000) selon l'une quelconque des revendications précédentes 1, dans lequel l'élément de connexion (1400) est une barre omnibus connectée à un port d'entrée/sortie de l'au moins un corps d'empilement de cellules (1200).

7. Le bloc batterie (1000) selon l'une quelconque des revendications précédentes 1, dans lequel l'au moins un composant électronique (1300) est un système de gestion de batterie (BMS), et l'élément de connexion (1400) est un faisceau de voltage bas (LV) connecté au système de gestion de batterie.

8. Le bloc batterie (1000) selon la revendication 1, dans lequel le vide (1131) et l'évidement (1133) sont spatialement séparés l'un de l'autre.
